(19) Europäisches Patentamt
European Patent Office
Office européen des brevets

(11) **EP 4 092 069 A1**

(12) **EUROPEAN PATENT APPLICATION**

(43) Date of publication:
**23.11.2022 Bulletin 2022/47**

(21) Application number: **22171219.3**

(22) Date of filing: **02.05.2022**

(51) International Patent Classification (IPC):
**C08J 3/14** $^{(2006.01)}$ **B29C 64/10** $^{(2017.01)}$
**B33Y 70/00** $^{(2020.01)}$

(52) Cooperative Patent Classification (CPC):
**C08J 3/14; B33Y 70/00;** B29C 64/153;
B29C 64/165; C08J 2359/02

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **20.05.2021 US 202117325296**

(71) Applicant: **Xerox Corporation**
**Webster, NY 14580 (US)**

(72) Inventors:
• **MORIMITSU, Kentaro**
**Mississauga, L5M 0H2 (CA)**
• **FARRUGIA, Valerie M.**
**Oakville, L6H 7V8 (CA)**

(74) Representative: **Grünecker Patent- und Rechtsanwälte**
**PartG mbB**
**Leopoldstraße 4**
**80802 München (DE)**

(54) **POLYOXYMETHYLENE MICROPARTICLES AND METHODS OF PRODUCTION AND USE THEREOF**

(57) Methods include dissolving a polyoxymethylene (POM) homopolymer or copolymer in one or more solvents at an elevated temperature (e.g., up to a boiling point+10°C ($T_{BP+10C}$) of the one or more solvents) to form a polymer mixture, wherein a difference in total Hansen solubility parameters ($\Delta\delta_t$) for the POM homopolymer or copolymer and the one or more solvents is 6 or less; cooling the polymer mixture to form a POM particle composition; and isolating the POM particle composition. Said method may be performed at ambient pressures.

FIG. 1

EP 4 092 069 A1

**Description**

**TECHNICAL FIELD**

The present disclosure relates to thermoplastic polyoxymethylene particles and methods of making such particles. Such particles, especially the highly spherical thermoplastic polyoxymethylene particles, may be useful, among other things, as starting material for additive manufacturing.

**BACKGROUND**

Three-dimensional (3-D) printing, also known as additive manufacturing, is a rapidly growing technology area. Although three-dimensional printing has traditionally been used for rapid prototyping activities, this technique is being increasingly employed for producing commercial and industrial objects, which may have entirely different structural and mechanical tolerances than do rapid prototypes.

Three-dimensional printing operates by depositing either 1) small droplets or streams of a melted or solidifiable material or 2) powder particles in precise deposition locations for subsequent consolidation into a larger object (a "consolidated body") that can have any number of complex shapes. Deposition and consolidation processes typically occur under the control of a computer to afford layer-by-layer buildup of the larger object. In a particular example, selective laser sintering (SLS) involves a three-dimensional printing system using a laser to promote the consolidation of polymer particles. For deposition and consolidation techniques, the nature of the polymer particles becomes important as particles having irregular shapes and poor flow characteristics can lead to inconsistent layer deposition, poor packing, and the formation of defects, voids, and other structural weak points. These challenges in forming consistent layers also increase the difficulty in printing objects having exacting structural and mechanical tolerances.

For good printing performance and maximization of interlayer fusion, polymer particles are often selected that exhibit good flow properties in the solid state. Flow properties may be evaluated, for example, by measuring the fraction of powder particles from a sample that are able to pass through a standard sieve of a specified size and/or measuring of the angle of repose. In general, the higher the circularity of the particles and the narrower the particle size distribution, the higher the powder flow performance.

Commercial polymer particles are often obtained by cryogenic grinding or precipitation processes, which can result in irregular particulate shapes and wide particle size distributions that can impede flow performance during additive manufacturing. Wide particle size distributions may be similarly problematic in this regard. Although poor powder flow performance may be addressed to some degree through dry blending with fillers and flow aids, these techniques may have limited effectiveness with softer polymer materials, such as elastomers, due to particulate agglomeration. Moreover, fillers and flow aids may do little to improve poor packing efficiency of irregularshaped powder particles.

SUMMARY

The present disclosure generally relates to POM particle compositions and methods producing the same.

In an aspect, methods include dissolving a polyoxymethylene (POM) homopolymer or copolymer in one or more solvents at an elevated temperature to form a polymer mixture, wherein a difference in total Hansen solubility parameters ($\Delta\delta_t$) for the POM homopolymer or copolymer and the one or more solvents is 6 or less; cooling the polymer mixture to form a POM particle composition; and isolating the POM particle composition.

In another aspect, compositions include a polyoxymethylene (POM) particle composition having a sintering window that is within 5°C of a sintering window of a polyoxymethylene starting material used in producing the POM particle composition.

**BRIEF DESCRIPTION OF THE DRAWINGS**

The following figures are included to illustrate certain aspects of the present disclosure, and should not be viewed as exclusive embodiments. The subject matter disclosed is capable of considerable modifications, alterations, combinations, and equivalents in form and function, as will occur to one having ordinary skill in the art and having the benefit of this disclosure.

FIG. 1 is a flow chart of a non-limiting example method for producing elastomeric particulates in accordance with the present disclosure.
FIG. 2 is an illustrative scanning electron micrograph of a comparative POM powder prepared by cryogenic grinding.
FIG. 3 is an optical micrograph of POM homopolymer particles in accordance with the present disclosure.
FIG. 4 is a particle size distribution for POM homopolymer particles in accordance with the present disclosure.

FIG. 5 is an optical micrograph of POM copolymer particles in accordance with the present disclosure.

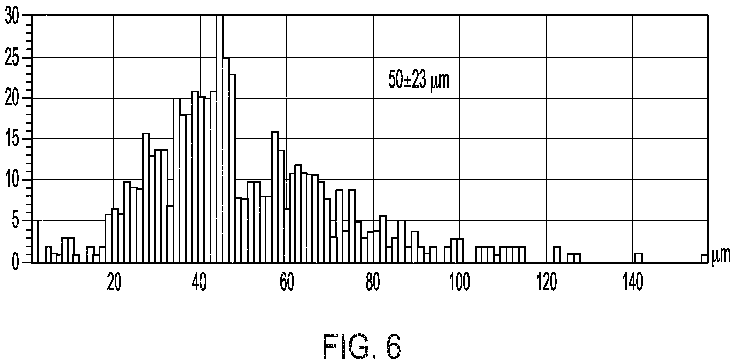

FIG. 6 is a particle size distribution for POM copolymer particles in accordance with the present disclosure.

FIGS. 7A and 7B are SEM micrographs of POM homopolymer particles prepared in accordance with the present disclosure.

FIGS. 8A and 8B are SEM micrographs of POM copolymer particles prepared in accordance with the present disclosure.

FIG. 9 is an SEM micrograph of POM homopolymer particles precipitated using benzyl alcohol as a solvent in accordance with the present disclosure.

FIG. 10 is an SEM micrograph of POM copolymer particles precipitated using benzyl alcohol as a solvent in accordance with the present disclosure.

FIG. 11 is an SEM micrograph of POM homopolymer particles precipitated using gamma-butyrolactone as a solvent in accordance with the present disclosure.

FIG. 12 is an SEM micrograph of POM copolymer particles precipitated using gamma-butyrolactone as a solvent in accordance with the present disclosure.

## DETAILED DESCRIPTION

The present disclosure generally relates to methods for preparing polyoxymethylene (POM) particle compositions having high surface area and narrow size distributions. Methods include the formation of POM particle compositions using temperature based crystallization and precipitation techniques. POM particle compositions generated include particles that are highly faceted with hierarchically structured features and having high circularity that are suitable for a variety of applications including additive manufacturing.

### Definitions and Test Methods

Terms used in the description and claims herein have their plain and ordinary meaning, except as modified by the paragraphs below.

As used herein, the term "thermoplastic polymer" refers to a plastic polymer material that softens/melts and hardens/solidifies reversibly on heating and cooling. Thermoplastic polymers encompass thermoplastic elastomers.

As used herein, the term "elastomer" refers to a copolymer comprising a crystalline "hard" section and an amorphous "soft" section. In the case of a polyurethane, the crystalline section may include a portion of the polyurethane comprising the urethane functionality and optional chain extender group, and the soft section may include the polyol, for instance.

As used herein, "ambient pressure" refers to pressures in a range of about 0.1 MPa to about 0.2 MPa.

As used herein, delimiters "such as" and "including" precede species that provided for example purposes, but are not intended to limit the disclosure to only those species unless specified.

Herein, D10, D50, D90, and diameter span are primarily used herein to describe particle sizes. As used herein, the term "D10" refers to a diameter below which 10% (on a volume-based distribution, unless otherwise specified) of the particle population is found. As used herein, the terms "D50," "average particle diameter," and "average particle size" refers to a diameter below which 50% (on a volume-based median average, unless otherwise specified) of the particle population is found. As used herein, the term "D90" refers to a diameter below which 90% (on a volume-based distribution, unless otherwise specified) of the particle population is found. As used herein, the terms "diameter span" and "span" and "span size" when referring to diameter provides an indication of the breadth of the particle size distribution and is calculated as (D90-D10)/D50.

Particle diameters and particle size distributions are determined by light scattering techniques using a Malvern MASTERSIZER™ 3000. For light scattering techniques, the control samples were glass beads with a diameter within the range of 15 $\mu$m to 150 $\mu$m under the tradename Quality Audit Standards QAS4002™ obtained from Malvern Analytical Ltd. Samples were analyzed as dry powders, unless otherwise indicated. The particles analyzed were dispersed in air and analyzed using the AERO S™ dry powder dispersion module with the MASTERSIZER™ 3000. The particle sizes were derived using instrument software from a plot of volume density as a function of size.

Particle size measurement and diameter span can also be determined by optical digital microscopy. The optical images are obtained using a Keyence VHX-2000 digital microscope using version 2.3.5.1 software for particle size analysis (system version 1.93).

As used herein, when referring to sieving, pore/screen sizes are described per U.S.A. Standard Sieve (ASTM E11-17).

As used herein, the terms "circularity" relative to the particles refers to how close the particle is to a perfect sphere. To determine circularity, optical microscopy images using flow particle imaging are taken of the particles. The perimeter (P) and area (A) of the particle in the plane of the microscopy image is calculated (e.g., using a SYSMEX FPIA 3000 particle shape and particle size analyzer, available from Malvern Instruments). The circularity of the particle is $C_{EA}/P$, where $C_{EA}$ is the circumference of a circle having the area equivalent to the area (A) of the actual particle. Herein, the circularity is based on three runs through a SYSMEX FPIA 3000 particle shape and particle size analyzer, where 6,000 to 10,000 particles are analyzed per run. The reported circularity is the median average circularity based on particle number. In the analysis, a threshold for distinguishing the grayscale levels between the background pixels and the particle pixels (e.g., to correct for non-uniform illumination conditions) was set at 90% of the background modal value.

As used herein, the term "sintering window" refers to the difference between the melting temperature (Tm) onset and the crystallization temperature (Tc) onset, or (Tm-Tc)onset. Tm, Tm (onset), Tc, and Tc (onset) are determined by differential scanning calorimetry per ASTM E794-06(2018) with a 10 °C/min ramp rate and a 10 °C/min cool rate.

The melting point of a polymer, unless otherwise specified, is determined by ASTM E794-06(2018) with 10°C/min ramping and cooling rates.

The softening temperature or softening point of a polymer, unless otherwise specified, is determined by ASTM D6090-17. The softening temperature can be measured by using a cup and ball apparatus available from Mettler-Toledo using a 0.50 gram sample with a heating rate of 1°C/min.

Angle of repose is a measure of the flowability of a powder. Angle of repose measurements were determined using a Hosokawa Micron Powder Characteristics Tester PT-R using ASTM D6393-14 "Standard Test Method for Bulk Solids" characterized by Carr Indices.

Hausner ratio ($H_r$) is a measure of the flowability of a powder and is calculated by $H_r = \rho_{tap}/\rho_{bulk}$, where $\rho_{bulk}$ is the bulk density per ASTM D6393-14 and $\rho_{tap}$ is the tapped density per ASTM D6393-14.

As used herein, viscosity of carrier fluids are the kinematic viscosity at 25 °C, unless otherwise specified, measured per ASTM D445-19. For commercially procured carrier fluids (e.g., PDMS oil), the kinematic viscosity data cited herein was provided by the manufacturer, whether measured according to the foregoing ASTM or another standard measurement technique.

As used herein, Hansen solubility parameters are determined per Hansen Solubility Parameters: A User's Handbook. Charles M. Hansen. CRC Press, Boca Raton, FL. 2007. 2nd Ed. Further, the Hansen solubility parameters for a mixture can be calculated by the volume-weighted average of the Hansen solubility parameters for each component in the mixture. The total Hansen solubility parameter is the geometric mean of the three Hansen solubility components: $\delta_D$ (from dispersion interactions), $\delta_P$ (from polar attraction), and $\delta$ (from hydrogen bonding).

Polyoxymethylene Particles and Methods of Production

Additive manufacturing (AM) is growing in importance beyond prototype objects to shortrun or one-off functional parts as the printable materials expand in number and quality. However, there are a relatively limited number of thermoplastic polymer types suitable for AM and available in appropriate sizes. As synthesized, polymer stocks tend to be distributed as large particles or aggregates that are incompatible with AM. While particle sizes can be reduced, methods often involve milling techniques that produce irregular particle shapes and wide particle size distributions that affect particle flow and deposition, or involve the use of high temperature high pressure conditions that can be difficult to scale effectively.

Methods disclosed herein include the formation of POM particle compositions having high circularity and narrow particle size distributions by polymer dissolution and precipitation at ambient pressure and relatively low temperatures. POM is a formaldehyde-based semi-crystalline engineering thermoplastic, which is also known by equivalent names polyacetal, polyformaldehyde, polymethylene glycol, and polyoxymethylene glycol. POM particulate compositions may also include POM copolymers having one or more ethylene oxide and/or dioxolane comonomers introduced by cyclic ethers and/or cyclic acetal comonomers, containing, e.g., cycles having 5 to 11 members. POM copolymer compositions disclosed herein may include one or more comonomers loaded as a percent by weight of total monomers in a range of about 2 wt% to about 50 wt%.

A comparison of various mechanical properties for POM and common polymers used in AM is shown in Table 1.

| Table 1: Comparison of Crystalline Polymer Types | | | | |
|---|---|---|---|---|
| Polymer | Elastic modulus [N/mm$^2$] | Yield Stress: $\sigma$yield [N/mm$^2$] | Elongation at break [%] | Melt Temperature: $T_{melt}$ [°C] |
| Polyoxymethylene | 2600 to 3200 | 60 to 75 | 20 to >50 [homo] 15 to 40 [copolymer] | 175 [homopolymer] 164 to 172 [copolymer] |
| Polyamide 12 | 1400 | 50 | ~200 | 170 to 180 |

(continued)

| Table 1: Comparison of Crystalline Polymer Types | | | | |
|---|---|---|---|---|
| Polymer | Elastic modulus [N/mm$^2$] | Yield Stress: $\sigma$yield [N/mm$^2$] | Elongation at break [%] | Melt Temperature: $T_{melt}$ [°C] |
| Polypropylene | 1400 to 1800 | 25 to 40 | >50 | 160 to 165 |
| High-density polyethylene | 600 to 1400 | 18 to 30 | >50 | 125 to 135 |
| Polyetheretherketone | 3700 | 100 | >50 | 335 |

Attempts have been made to utilize thermoplastics such as POM in layered deposition AM techniques such as powder bed fusion (PBF) or selective laser sintering (SLS), but most native (as synthesized) polymer particle compositions must be processed by pulverization or milling to place the particles within the a workable range of about 50 $\mu$m to about 70 $\mu$m for many deposition and consolidation techniques. For example, standard size reduction methods often include cryogenic milling, spray drying, and wet grinding followed by thermal rounding, such as in a heated downer reactor. However, the use of milling and pulverization often produces particles having wide particle size distributions that are irregular in shape and exhibit poor flow characteristics.

POM particle compositions disclosed herein have enhanced particle uniformity and particle flow rates, particularly when compared to standard techniques used to produce particle compositions. POM particle compositions produced may exhibit good particle flow and deposition, which may reduce the formation of voids upon heating and consolidation, leading to increased mechanical properties of printed objects, such as elastic modulus and yield stress.

In addition, POM particle compositions disclosed herein exhibit enhanced surface area and morphology, which may increase utility for the materials for other applications including filtration and formulation in catalyst compositions. The morphology of the particles exhibit increased void space and effective surface area that increase the applicability of the particles for other applications such as purification and as a catalytic substrate. Complex particle shapes can also increase sintering performance during consolidation under localized heating during AM, and may lead to the formation of consolidated articles having increased porosity, pore connectivity, texture, and layering. The morphology of the POM polymer compositions described herein may be characterized by one or more of: wrinkled, hierarchical structures (platelets or sheets adhered together to form the particle), and porous.

While generally unified as having increased surface area, particles and consolidated articles formed therefrom may exhibit irregular surfaces and shapes, including platelet-like layers, pleated structures, fractal-like aggregates, flower-like particles, exfoliated particles, , and particles having microstructure, facets, and features throughout their volume.

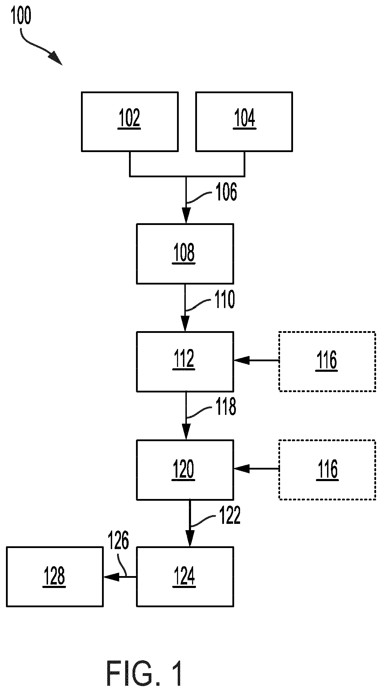

Methods disclosed herein include the formation of POM polymer compositions having high surface area and narrow size distributions that include dissolution of a POM homopolymer or copolymer at ambient pressures in one or more solvents having defined Hansen solubility parameters with heating to form a polymer mixture. FIG. 1 is a flow chart of a non-limiting example method 100 for producing polymer microspheres in accordance with the present disclosure. As shown, POM polymer 102 and solvent 104 are combined 106 to produce mixture 108. Mixture 108 can be formulated with a percent by weight of the POM polymer 102 (wt%) in a range of about 5 wt% to about 50 wt%, about 8 wt% to about 25 wt%, or about 10 wt% to about 20 wt%. While "102" is used with reference to POM polymer, methods disclosed herein can also be applied to POM copolymers and polymer blends.

Suitable solvents 104 for use in methods disclosed herein include solvents capable of dissolving POM polymers and copolymers, and may be selected using Hansen Solubility Parameters (HSP) describing solvent/polymer interactions for optimization of polymer dissolution in solvents. HSP depends on entropy and on the nature of the interaction between the solvent and material molecule, particularly whether the interactions are polar, dispersive, or based on hydrogen bonding. These interaction strengths are quantified and tabulated for many polymers and solvents as the polar ($\delta_p$), dispersive ($\delta_d$), and hydrogen bonding ($\delta_h$) components of the Hansen solubility parameters in units of MPa$^{1/2}$. The total Hansen solubility parameter ($\delta_t$) can also be obtained according to Eq. 1.

$$(\delta_t)^2 = (\delta_p)^2 + (\delta_d)^2 + (\delta_h)^2 \qquad \text{Eq. 1}$$

The difference in total Hansen solubility parameters ($\Delta\delta_t$), calculated as the absolute value of the difference between the $\delta_t$ of the POM homopolymer or copolymer and the $\delta_t$ of the respective solvent, may be a useful metric for describing polymer solubility. Generally, the lower the Δδt between the polymer and the solvent indicates greater polymer solubility. While not limited by a particular theory, it is believed that Δδt higher than about 2 contribute to the enhancement of surface roughness, faceting, and platelet or flake formation. For example, solvents having higher $\delta_H$ than the respective polymer being solubilized tend to form irregular aggregates, due to the preferential hydrogen bonding of the polymer with the solvent. As a result, polymer packing during particle formation tends to be less complete, leading to changes in particle and surface morphology. Table 2 lists a number of selected solvents and their associated HSPs using POM solubility as a reference.

| Table 2: Hansen Solubility Parameters for selected solvents. | | | | | | |
|---|---|---|---|---|---|---|
| Polymer/Solvent | $\delta_d$ (MPa$^{1/2}$) | $\delta_\rho$ (MPa$^{1/2}$) | $\delta_h$ (MPa$^{1/2}$) | $\delta_t$ (MPa$^{1/2}$) | $\Delta\delta_t$ (MPa$^{1/2}$) | Boiling Point (°C) |
| **POM** | **17.1** | **3.1** | **10.7** | **20.41** | **-** | **-** |
| Methanol | 15.1 | 12.3 | 22.3 | 29.60 | 9.19 | 65 |
| Malononitrile | 17.0 | 18.4 | 6.7 | 25.93 | 5.52 | 220 |
| γ-butyrolactone (GBL) | 18.0 | 16.6 | 7.4 | 25.58 | 5.17 | 204 |
| Dimethylformamide (DMF) | 17.4 | 13.7 | 11.3 | 24.86 | 4.45 | 153 |
| 1-Propanol (n-propanol, n-propyl alcohol) | 16.0 | 6.8 | 17.4 | 24.60 | 4.19 | 97 |
| Acetonitrile (ethane nitrile) | 15.3 | 18.0 | 6.1 | 24.40 | 3.99 | 82 |
| N-methyl pyrrolidone (NMP) | 18.0 | 12.3 | 10.6 | 24.24 | 3.83 | 202 |
| 2-Chlorophenol | 19.0 | 5.5 | 13.9 | 24.18 | 3.77 | 174.9 |
| Phenol | 18.0 | 5.9 | 14.9 | 24.10 | 3.69 | 181.7 |
| Benzyl alcohol | 18.4 | 6.3 | 13.7 | 23.79 | 3.38 | 205 |
| N,N-dimethyl acetamide (DMAc) | 16.8 | 11.5 | 10.2 | 22.77 | 2.36 | 165.1 |
| Diethylene glycol n-butyl ether acetate (DEGBEA) | 16.0 | 4.1 | 8.2 | 18.44 | 1.97 | - |
| Triacetin | 16.5 | 4.5 | 9.1 | 19.37 | 1.04 | - |
| Benzaldehyde | 19.4 | 7.4 | 5.3 | 21.43 | 1.02 | - |
| Acetophenone | 18.8 | 9.0 | 4.0 | 21.22 | 0.81 | - |
| Benzyl benzoate | 20.0 | 5.1 | 5.2 | 21.28 | 0.87 | - |
| Benzyl ether | 19.6 | 3.4 | 5.2 | 20.56 | 0.15 | - |
| Diphenyl ether | 19.4 | 3.4 | 4.0 | 20.10 | 0.31 | 258 |

Suitable solvents useful in the methods disclosed herein include solvents (or solvent mixtures) having a $\Delta\delta_t$ with respect to the POM homopolymer or copolymer being solubilized of about 6 or less, about 5.5 or less, or about 5 or less. Additionally, suitable solvents useful in the methods disclosed herein include solvents (or solvent mixtures) having a $\Delta\delta_t$ with respect to the POM homopolymer or copolymer being solubilized in a range of about 2 to about 6, or about 2.5 to about 6, or about 2.5 to about 5.5.

Suitable solvents include C1 to C8 acid amides, such as formamide and dimethyl formamide; C4 to C8 cyclic ethers; C4 to C8 cyclic amides, such as N-methyl pyrrolidone; C4 to C8 cyclic esters, such as gamma butyrolactone; C4 to C8 carbonate esters such as ethylene carbonate; alcohols such as propanol, phenol, cyclohexanol, and benzyl alcohol; nitrobenzene; aromatics such as amine-containing aromatics including aniline, halogenated aromatics including bromobenzene, chlorophenols; and the like; and malorinitrile.

During the manufacture of mixture 108, the POM polymer 102 and solvent (or solvent mixture) 104 may independently be heated before, during, and/or after the process of being combined at 106 to a temperature in a range of about 100 °C to about 220 °C, about 120 °C to about 190 °C, or about 150 °C to about 190 °C. The temperature to which the POM polymer 102, solvent 104, and/or mixture 108 is heated may vary on the boiling point of the particular solvent or solvent mixture 104 used. Generally, heating may be to a boiling point+10°C of the solvent or solvent mixture ($T_{BP+10C}$ of the solvent or solvent mixture). For example, the boiling point of DMF is about 153°C at ambient pressure, so a mixture with DMF as the only solvent may be heated to about 163°C at ambient pressure. In another example, the mixture may include a mixture of solvents where the mixture may then be heated up to the boiling point of the mixture of solvents +10°C. One skilled in the art will recognize that the boiling point changes with pressure and composition and will recognize how to determine the boiling point of a solvent or mixture of solvents for a given temperature. Preferably, significant evaporation of the solvent or solvent mixture is avoided so that the solids concentrations is maintained at the desired level.

Mixture 108 can then be cooled at 110 to form mixture 112 containing precipitated POM polymer particles. A precipitating solvent 116 can be added to mixture 112 to initiate precipitation and/or to wash the formed POM particles. Precipitating solvent 116 may be miscible with the solvent 104 and nonreactive (e.g., non-swelling and non-dissolving) with the precipitated POM particles. Precipitating solvent 116 can include a solvent (or solvent mixture) having a $\Delta\delta t$ with respect to the POM homopolymer or copolymer of about 7 or more. Precipitating solvents may include alcohols such as methanol, ethanol, and the like, water, polyols such as ethylene glycol, propylene glycol, butanediol, and the like. Precipitating solvent 116 can be added at a ratio of solvent 104 to precipitating solvent in a range of about 2:1 to about 1:2, about 1.5:1 to about 1:1, or about 1.5:1 to about 1:1.5.

Following precipitation, mixture 112 can be separated at 118 to yield POM particle composition 120. Separation processes at 118 can include a number of separation techniques including filtration, decantation, settling, and the like. During and/or following separation process 118, additional precipitating solvent 116 can be added to wash POM particle composition 120. POM particle composition 120 can be processed further at 122 to remove traces of solvent 104 and/or precipitating solvent 116, such as by drying under ambient conditions or vacuum, with or without the application of heat.

POM polymer compositions 120 disclosed herein can exhibit rough, faceted surface morphology that introduce void space at the surface. The void space generally does not contain polymer, rather, the voids may contain, for example, residual solvent 104, air, or be void. The POM particle compositions 120 can include a percentage of void space in a range of about 0.5% to about 10%, about 0.5% to about 5%, or about 1% to about 5%.

The POM particle compositions 120 may include residual solvent 104 and/or precipitating solvent 116 of the POM particle compositions 120 at about 5 wt% or less (or about 0.001 wt% to about 5 wt%, or about 0.001 wt% to about 0.1 wt%, or about 0.01 wt% to about 0.5 wt%, or about 0.1 wt% to about 2 wt%, or about 1 wt% to about 5 wt%).

The POM polymer composition 120 may optionally be further purified at 122 to produce purified polymer particles 124. For example, to narrow the particle size distribution (or reduce the diameter span), the polymer particles 120 can be passed through a sieve having a pore size of about 10 $\mu$m to about 250 $\mu$m (or about 10 $\mu$m to about 100 $\mu$m, or about 50 $\mu$m to about 200 $\mu$m, or about 150 $\mu$m to about 250 $\mu$m).

In yet another example of purification technique, the POM particle compositions 124 (or 120) may be blended with additives at 126 to achieve supplemented POM particle composition 128. Examples of additives include antioxidants, acid trapping agents, stabilizer additives, flow aids, fillers or other substances intended to tailor the properties of the POM particle compositions for an intended application. Mixing of the additional components may be conducted by dry blending techniques. Suitable examples of flow aids (e.g., carbon black, graphite, silica, and the like) and similar substances will be familiar to one having ordinary skill in the art.

POM particle compositions 120 disclosed herein may be further processed based on the intended application. In one example, POM particle compositions 120 may be passed through a sieve or similar structure to remove larger particles and agglomerated particles that may have poor flow characteristics. POM particle compositions 120 may also function as a support for catalysts and other particles using a number of physical mixing approaches. For example, a catalyst may be dispersed in a suitable solvent such as methanol by homogenization and combined with a solution containing a POM particle composition 120 already wetted with a compatible solvent. The solvent mixture may then be evaporated to obtain catalyst-doped POM particles that may then be 3D-printed into a matrix or other support. The same techniques may similarly be applied to POM particle compositions 124 and 128.

The POM particle composition 120 may have a D10 of about 5 $\mu$m to about 50 $\mu$m (or about 10 $\mu$m to about 50 $\mu$m, about 10 $\mu$m to about 40 $\mu$m, about 15 $\mu$m to about 35 $\mu$m, or about 15 $\mu$m to about 25 $\mu$m), a D50 of about 20 $\mu$m to about 90 $\mu$m (or about 20 $\mu$m to about 80 $\mu$m, or about 25 $\mu$m to about 75 $\mu$m, or about 30 $\mu$m to about 75 $\mu$m, or about 40 $\mu$m to about 70 $\mu$m), and a D90 of about 70 $\mu$m to about 180 $\mu$m (or about 75 $\mu$m to about 170 $\mu$m, or about 80 $\mu$m to about 165 $\mu$m, or about 90 $\mu$m to about 155 $\mu$m), wherein D10<D50<D90. POM particle compositions 120 may also have a diameter span of about 0.4 to about 3 (or about 0.6 to about 2, or about 0.4 to about 1.5, or about 1 to about 3). Without limitation, diameter span values of 1.0 or greater are considered broad, and diameter spans values of 0.75 or less are considered narrow. The same ranges may similarly apply to POM particle compositions 124 and 128. Particle size measurements may be made using any suitable testing device, including a Malvern MASTERSIZER 3000.

The POM particle composition 120 may have a circularity of about 0.6 or greater (or about 0.6 to about 1.0, or about 0.65 to about 0.95, or about 0.7 to about 0.95, or about 0.75 to about 0.99, or about 0.77 to about 0.99, or about 0.8 to 0.99). The same ranges may similarly apply to POM particle compositions 124 and 128.

The POM particle composition 120 may have an angle of repose determined according to ASTM D6393-14 of about 20° to about 50° (or about 20° to about 45°, or about 25° to about 45°, or about 30° to about 45°, or about 35° to about 45°). The same ranges may similarly apply to POM particle compositions 124 and 128.

The POM particle composition 120 may have a Hausner ratio of about 1.0 to about 1.5 (or about 1.0 to about 1.2, or about 1.1 to about 1.3, or about 1.2 to about 1.35, or about 1.3 to about 1.5). The same ranges may similarly apply to POM particle compositions 124 and 128.

The POM particle composition 120 may have a bulk density of about 0.3 $g/cm^3$ to about 1.3 $g/cm^3$ (or about 0.3 $g/cm^3$ to about 1.3 $g/cm^3$, or about 0.4 $g/cm^3$ to about 1.25 $g/cm^3$, or about 0.5 $g/cm^3$ to about 1.2 $g/cm^3$, or about 0.5 $g/cm^3$ to about 1.1 $g/cm^3$). The same ranges may similarly apply to POM particle compositions 124 and 128.

POM particle compositions 120 disclosed herein may have a sintering window in a range of about 14 °C to about 30 °C, about 15 °C to about 25 °C, or about 15 °C to about 20 °C. The sintering window for POM particle composition 120 may be within 10°C, preferably within 5°C, of the sintering window of the POM polymer 102. The same ranges may similarly apply to POM particle compositions 124 and 128.

POM particle compositions 120 disclosed herein may have a bulk density of about 0.3 $g/cm^3$ to about 1.3 $g/cm^3$ (or about 0.3 $g/cm^3$ to about 1.3 $g/cm^3$, or about 0.4 $g/cm^3$ to about 1.25 $g/cm^3$, or about 0.5 $g/cm^3$ to about 1.2 $g/cm^3$, or about 0.5 $g/cm^3$ to about 1.1 $g/cm^3$). The same ranges may similarly apply to POM particle compositions 124 and 128.

POM particle compositions 120 disclosed herein may have a BET surface area as determined according to ASTM D3663-20 of about 10 $m^2/g$ to about 350 $m^2/g$, about 10 $m^2/g$ to about 300 $m^2/g$, about 15 $m^2/g$ to about 250 $m^2/g$, or about 20 $m^2/g$ to about 200 $m^2/g$. The same ranges may similarly apply to POM particle compositions 124 and 128.

POM particle compositions 120 disclosed herein may have a decomposition temperature in a range of about 180 °C to about 400 °C, about 180 °C to about 380 °C, or about 180 °C to about 350 °C. The same ranges may similarly apply to POM particle compositions 124 and 128.

POM particle compositions 120 may have a melting point or softening temperature of about 150°C to about 200 °C, about 160°C to about 200 °C, or about 170°C to about 190 °C. The same ranges may similarly apply to POM particle compositions 124 and 128.

Applications

In particular applications, the compositions disclosed herein may be utilized in threedimension printing processes, particularly those employing selective laser sintering to promote particle consolidation. The POM particle compositions of the present disclosure may exhibit advantageous properties over elastomeric particles having irregular shapes or wider particulate distributions, such as those available commercially. POM particle compositions may also be printed using AM techniques to prepare articles, lightweight composites, doped with catalyst and printed into supports, or incorporated into membranes or matrices for oil absorption. AM techniques may utilize heating and consolidation of the POM particle composition, and may include Powder Bed Fusion (PBF), Selective Laser Sintering (SLS), Selective Heat Sintering (SHS), Selective Laser Melting (SLM), Electron Beam Melting (EBM), Binder Jetting, and Multi Jet Fusion (MJF). In non-limiting examples, the POM particle compositions of the present disclosure may undergo consolidation at lower laser powers and afford a decreased extent of void formation in an object produced by three-dimensional printing.

AM processes of the present disclosure may comprise: depositing a POM particle composition 120 (similarly, 124 or 128) of the present disclosure upon a surface in a specified shape and/or layers, and once deposited, heating at least a portion of the polymer particles to promote consolidation thereof and form a consolidated body (object), such that the consolidated body has a void percentage of about 1% or more (e.g., 1% to about 5%, or about 1.5% to about 5%, or about 2.5% to about 5%, or about 3% to about 5%) after being consolidated. For example, heating and consolidation of the POM particle composition particles 120 (similarly, 124 or 128) may take place in an AM apparatus employing a laser, such that heating and consolidation take place by selective laser sintering.

POM particle compositions disclosed herein can be used to prepare articles having enhanced elastic modulus and yield stress when compared to alternative thermoplastics such as nylon. Examples of objects formable using AM include containers (e.g., for food, beverages, cosmetics, personal care compositions, medicine, and the like), shoe soles, toys, furniture parts, decorative home goods, plastic gears, screws, nuts, bolts, cable ties, medical items, prosthetics, orthopedic implants, production of artifacts that aid learning in education, 3D anatomy models to aid in surgeries, robotics, biomedical devices (orthotics), home appliances, dentistry, automotive and airplane/aerospace parts, electronics, sporting goods, and the like. Other applications for POM particle compositions of the present disclosure may include, but are not limited to, use as a filler in paints and powder coatings, inkjet materials and electrophotographic toners, and the like.

Example Embodiments

Embodiments disclosed herein include:

A. Methods for preparing POM particle compositions. The methods comprise: dissolving a POM homopolymer or copolymer in one or more solvents at a n elevated temperature (e.g., up to a boiling point+10°C ($T_{BP+10C}$) of the one or more solvents) to form a polymer mixture, wherein a difference in total Hansen solubility parameters ($\Delta\delta t$) for the POM homopolymer or copolymer and the one or more solvents is 6 or less; cooling the polymer mixture to form a POM particle composition; and isolating the POM particle composition.

B. A method of AM using POM particle compositions. The method comprising depositing the POM particle composition of the present disclosure upon a surface in a specified shape, and heating at least a portion of the POM particle composition to promote consolidation thereof and form a consolidated body (object), such that the consolidated body has a void percentage of about 1.0% or more after being consolidated.

C. A POM particle composition. The composition comprising a POM particle composition having a sintering window that is within 5°C of a sintering window of a polyoxymethylene starting material used in producing the POM particle composition.

Each of embodiments A, B, and C may have one or more of the following additional elements in any combination: Element 1: wherein the one or more solvents comprise one or more selected from a group consisting of C1 to C8 acid amides, C4 to C8 cyclic ethers, C4 to C8 carbonate esters, C4 to C8 cyclic amides, C4 to C8 cyclic esters, propanol, phenol, cyclohexanol, benzyl alcohol, nitrobenzene, aniline, bromobenzene, chlorophenols, malorinitrile; Element 2: wherein the one or more solvents has a $\Delta\delta_t$ in a range of 2 to 6; Element 3: wherein the elevated temperature is in a range of about 120 °C to about 190 °C; Element 4: wherein dissolving is performed under ambient pressure; Element 5: wherein the POM homopolymer or copolymer percent by weight of the polymer mixture (wt%) is in a range of about 10 wt% to about 20 wt%; Element 6: further comprising adding a precipitating solvent having a $\Delta\delta_t$ between the POM homopolymer or copolymer and the precipitating solvent of 7 or more during the step of cooling the polymer mixture; Element 7: further comprising doping the POM particle composition with a catalyst; Element 8: wherein the POM particle composition has a BET surface area determined according to ASTM D3663-20 in a range of about 5 $m^2$/g to about 30 $m^2$/g; Element 9: wherein the POM particle composition has a D50 determined according to ASTM D1921-18 in a range of about 40 $\mu$m to about 70 $\mu$m; Element 10: wherein the POM particle composition has a decomposition temperature in a range of about 180 °C to about 400 °C; Element 11: wherein the POM particle composition has a sintering window in a range of about 14 °C to about 30 °C; Element 12: wherein the POM particle composition has a sintering window within 5 °C of the sintering window of the POM homopolymer or copolymer; Element 13: wherein the POM particle composition has a Hausner ratio in the range of about 1.0 to about 1.5; Element 14: wherein the POM particle composition has a percentage of void space in a range of about 1% to about 5%; Element 15: wherein isolating comprises filtering the POM particle composition from the polymer mixture; Element 16: wherein the POM particle composition has an angle of repose determined according to ASTM D6393-14 of about 20 ° to about 50 °; Element 17: wherein the POM particle composition has a percentage of void space in a range of about 1.0% to about 5.0%; Element 18: wherein the POM particle composition has a sintering window in a range of about 14 °C to about 30 °C; Element 19: wherein the POM particle composition has a BET surface area determined according to ASTMD3663-20 in a range of about 10 $m^2$/g to about 350 $m^2$/g; Element 20: wherein the POM particle composition has an angle of repose determined according to ASTM D6393-14 of about 20° to about 50°; Element 21: wherein the elevated temperature is a boiling point+10°C ($T_{BP+10C}$) of the one or more solvents; Element 22: wherein the POM homopolymer or copolymer percent by weight of the polymer mixture (wt%) is in a range of about 10 wt% to about 20 wt%; Element 23: wherein the one or more solvents has a $\Delta\delta_t$ in a range of about 2 to about 6; Element 24: wherein particles have a circularity of about 0.6 or greater; and Element 25: wherein the particles have a D10 of about 5 $\mu$m to about 50 $\mu$m, a D50 of about 40 $\mu$m to about 70 $\mu$m, and a D90 of about 90 $\mu$m to about 155 $\mu$m, wherein D10<D50<D90.

By way of non-limiting example, exemplary combinations applicable to A, B and C include, but are not limited to, 1 and any one or more of 2 to 25; 2 and any one or more of 1, 3 to 25; 3 and any one or more of 1 to 2 and 4 to 25; 4 and any one or more of 1 to 3 and 5 to 25; 5 and any one or more of 1 to 4 and 6 to 25; 6 and any one or more of 1 to 5 and 7 to 25; 7 and any one or more of 1 to 6 and 8 to 25; 8 and any one or more of 1 to 7 and 9 to 25; 9 and any one or more of 1 to 8 and 10 to 25; 10 and any one or more of 1 to 9 and 11 to 25; 11 and any one or more of 1 to 10 and 12 to 25; 12 and any one or more of 1 to 11 and 13 to 25; 13 and any one or more of 1 to 12 and 14 to 25; 14 and any one or more of 1 to 13 and 15 to 25; 15 and any one or more of 1 to 14 and 16 to 25; 16 and any one or more of 1 to 15 and 17 to 25; 17 and any one or more of 1 to 16 and 18 to 25; 18 and any one or more of 1 to 17 and 19 to 25; 19 and any one or more of 1 to 18 and 20 to 25; 20 and any one or more of 1 to 19 and 21 to 25; 21 and any one or more of 1 to 20 and 22 to 25; 22 and any one or more of 1 to 21 and 23 to 25; 23 and any one or more of 1 to 22 and 24 to 25; 24 and any one or more of 1 to 23 and 25; and 25 and any one or more of 1 to 24.

Clauses

Clause 1: A method, comprising: dissolving a polyoxymethylene (POM) homopolymer or copolymer in one or more solvents at an elevated temperature (e.g., up to a boiling point+10°C ($T_{BP+10C}$) of the one or more solvents) to form a polymer mixture, wherein a difference in total Hansen solubility parameters ($\Delta\delta_t$) for the POM homopolymer or copolymer and the one or more solvents is 6 or less; cooling the polymer mixture to form a POM particle composition; and isolating the POM particle composition.

Clause 2: The method of Clause 1, wherein the one or more solvents comprise one or more selected from a group consisting of C1 to C8 acid amides, C4 to C8 cyclic ethers, C4 to C8 carbonate esters, C4 to C8 cyclic amides, C4 to C8 cyclic esters, propanol, phenol, cyclohexanol, benzyl alcohol, nitrobenzene, aniline, bromobenzene, chlorophenols, malorinitrile.

Clause 3: The method of Clause 1, wherein the one or more solvents has a $\Delta\delta_t$ in a range of 2 to 6.

Clause 4: The method of Clause 1, wherein the elevated temperature is in a range of about 120 °C to about 190 °C.

Clause 5: The method of Clause 1, wherein dissolving is performed under ambient pressure.

Clause 6: The method of Clause 1, wherein the POM homopolymer or copolymer percent by weight of the polymer mixture (wt%) is in a range of about 10 wt% to about 20 wt%.

Clause 7: The method of Clause 1, further comprising adding a precipitating solvent having a $\Delta\delta t$ between the POM homopolymer or copolymer and the precipitating solvent of 7 or more during the step of cooling the polymer mixture.

Clause 8: The method of Clause 1, further comprising doping the POM particle composition with a catalyst.

Clause 9: The method of Clause 1, wherein the POM particle composition has a BET surface area determined according to ASTM D3663-20 in a range of about 5 $m^2$/g to about 30 $m^2$/g.

Clause 10: The method of Clause 1, wherein the POM particle composition has a D50 determined according to ASTM D1921-18 in a range of about 40 $\mu$m to about 70 $\mu$m.

Clause 11: The method of Clause 1, wherein the POM particle composition has a decomposition temperature in a range of about 180 °C to about 400 °C.

Clause 12: The method of Clause 1, wherein the POM particle composition has a sintering window in a range of about 14 °C to about 30 °C.

Clause 13: The method of Clause 1, wherein the POM particle composition has a sintering window within 5 °C of the sintering window of the POM homopolymer or copolymer.

Clause 14: The method of Clause 1, wherein the POM particle composition has a Hausner ratio in the range of about 1.0 to about 1.5.

Clause 15: The method of Clause 1, wherein the POM particle composition has a percentage of void space in a range of about 1% to about 5%.

Clause 16: The method of Clause 1, wherein isolating comprises filtering the POM particle composition from the polymer mixture.

Clause 17: The method of Clause 1, wherein the POM particle composition has an angle of repose determined according to ASTM D6393-14 of about 20 ° to about 50 °.

Clause 18: A POM particle composition made by Clause 1.

Clause 19: A method comprising: depositing the POM particle composition of Clause 18 upon a surface in a specified shape, and heating at least a portion of the POM particle composition to promote consolidation thereof and form a consolidated body (object), such that the consolidated body has a void percentage of about 1.0% or more after being consolidated.

Clause 20: The method of Clause 19, wherein the consolidated body has a void percentage in a range of about 1.0% to about 5.0%.

Clause 21: A composition comprising: a polyoxymethylene (POM) particle composition having a sintering window that is within 5°C of a sintering window of a polyoxymethylene starting material used in producing the POM particle composition.

Clause 22: The composition of Clause 21, wherein the POM particle composition has a percentage of void space in a range of about 1.0% to about 5.0%.

Clause 23: The composition of Clause 21, wherein the POM particle composition has a sintering window in a range of about 14 °C to about 30 °C.

Clause 24: The composition of Clause 21, wherein the POM particle composition has a BET surface area determined according to ASTM D3663-20 in a range of about 10 $m^2$/g to about 350 $m^2$/g.

Clause 25: The composition of Clause 21, wherein the POM particle composition has an angle of repose determined according to ASTM D6393-14 of about 20° to about 50°.

Clause 26: The composition of Clause 21, wherein the POM particle composition is prepared by a method comprising: dissolving a polyoxymethylene (POM) homopolymer or copolymer in a solvent at an elevated temperature (e.g., up to a boiling point+10°C ($T_{BP+10C}$) of the one or more solvents) under ambient pressure to form a polymer mixture, wherein a difference in total Hansen solubility parameters ($\Delta\delta_t$) for the POM homopolymer or copolymer and the one or more solvents is 6 or less; cooling the polymer mixture to form the POM particle composition; and isolating the POM particle composition.

Clause 27: The composition of Clause 26, wherein the elevated temperature is in a range of about 120 °C to about 190 °C.

Clause 28: The composition of Clause 26, wherein the POM homopolymer or copolymer percent by weight of the polymer mixture (wt%) is in a range of about 10 wt% to about 20 wt%.

Clause 29: The composition of Clause 26, wherein the one or more solvents has a $\Delta\delta_t$ in a range of about 2 to about 6.

Clause 30: The composition of Clause 21, wherein particles have a circularity of about 0.6 or greater.

Clause 31: The composition of Clause 21, wherein the particles have a D10 of about 5 $\mu$m to about 50 $\mu$m, a D50 of about 40 $\mu$m to about 70 $\mu$m, and a D90 of about 90 $\mu$m to about 155 $\mu$m, wherein D10<D50<D90.

To facilitate a better understanding of the embodiments of the present invention, the following examples of preferred or representative embodiments are given. In no way should the following examples be read to limit, or to define, the scope of the invention.

## EXAMPLES

Comparative Example: Cryogenic Milling of POM particles

As a comparative example, a POM powder was generated by cryogenic grinding of pellets to a particle size less than 80 $\mu$m and then mixed with 0.2 wt% of AEROSIL® silica additive to improve the flow of the particles. To reduce particle size, a sample of POM pellets was cooled down to -50 °C and milled with a counter-rotating pinned disc mill. After milling, the powder was classified and screened down to an average particle diameter of 80 $\mu$m, where 97.5% is <250 $\mu$m, 88% is <125 $\mu$m and53.5% is <63 $\mu$m. SEM micrographs of the resulting powder are shown in FIG. 1 in which irregular particle shapes having poor circularity were observed.

Example 1: Dissolution of POM Homopolymer and Copolymer

In this example, a POM particle composition is prepared by a dissolution and precipitation method in accordance with the present disclosure. Within a vial, 1 gram of granular POM (Goodfellow OX316300 Delrin Tenac (Delta Scientific)) was combined with 9 mL dimethylformamide (DMF). A magnetic stir bar was added to the vial, and the vial was submerged to 135°C in an oil bath while stirring at 300 rpm. At 15 minutes, the temperature reached 140°C and the solution became turbid without dissolution, and developed turbidity with some bubbling by 55 minutes. The POM was fully dissolved by 1.75 hours, and the polymer mixture was cooled to room temperature to form a gel.

The same procedure as used to dissolve POM copolymer microparticles having 2 wt% to 5 wt% of ethylene oxide unit introduced by cyclic ethers and/or cyclic acetal comonomers. In general, the copolymer dissolved faster than the homopolymer with the evolution of small bubbles. At 1.5 hours of stirring, the polymer mixture was cooled down to room temperature with stirring at 300 rpm to yield a gel.

Example 2: Precipitation Procedure for POM Polymer and Copolymer

The POM homopolymer and copolymer gels from Example 1 were transferred to individual 100 mL beakers. To each beaker was added 20 mL of methanol, and the gels were stirred with a spatula triturating the large aggregates. The resulting particles were collected on separate WHATMAN® Grade 1 filter papers and rinsed with 20 mL methanol, while supported on the filter paper. The samples were collected and dried overnight in an oven set at about 65 °C. The POM homopolymer (Sample 1) resulted in 0.958 g (96% yield) of white powder, while the POM copolymer (Sample 2) resulted in 0.970 g (97% yield) of white powder.

During dissolution and precipitation, various stabilizer additives added to the virgin resin become inevitably extracted from the polymer matrix into the solvent during the precipitation of the POM particles as indicated by a change in the decomposition temperatures for both homo- and copolymer as indicated in Table 3. Additives such as antioxidants, formaldehyde scavengers or UV stabilizers can be added back to the particles during an additional "wet" phase treatment step prior to precipitation, or alternatively blended with the particles as dry additive(s).

| Table 3: Decomposition temperature (Td) of POM particles | | |
|---|---|---|
| Sample | Td before ppt (°C) | Td after ppt (°C) |
| Sample 1 (Homopolymer) | 308 | 242 |
| Sample 2 (Copolymer) | 309 | 256 |

Samples 1 and 2 were analyzed by differential scanning calorimetry (DSC). Samples 1 and 2 both show a decrease in their sintering window (calculated as the difference between the melting point and the recrystallization point) of about 29% to 35%, but both remain within useful ranges.

As shown in Table 4, the DSC data show a narrowing of the melt and recrystallization peaks as well, indicating that processing additives may have diminished during processing into particles.

| Table 4: DSC of POM pellets before and after being processed into precipitated particles. | | | | | | | |
|---|---|---|---|---|---|---|---|
| Sample | 1st heat Tm1 (°C) | ΔHcal (J/g) | 1st cool Tc (°C) | Δcp (J/g) | 2nd heat Tm2 (°C) | ΔHcal (J/g) | Sintering window (°C) |
| POM pellets (Homopolymer) | 182.67 | 158.27 | 147.58 | 192.66 | 177.55 | 199.43 | 35.09 |
| Sample 1 (Homopolymer) | 163.01 / 174.41 | 65.26/ 192.49 | 149.36 | 197.49 | 174.51 | 208.57 | 25.05 |
| POM pellets (Copolymer) | 170.61 | 164.93 | 145.04 | 164.31 | 167.63 | 187.73 | 25.57 |
| Sample 2 (Copolymer) | 159.40/ 163.05 | 281.06 | 146.44 | 193.96 | 164.11 | 213.10 | 16.61 |

Inductively coupled plasma analysis was also conducted on the unprocessed pellets and Samples 1 and 2, as shown in Table 4. The elemental analysis indicates that no boron (B) and antimony (Sb) were detected, while calcium (Ca) and silicon (Si) increased to some extent.

| Table 5: Inductively coupled plasma (ICP) data of POM pellets before and after being processed into precipitated particles | | B / ppm | Ca / ppm | Mg / ppm | Sb / ppm | Si / ppm |
|---|---|---|---|---|---|---|
| Homopolymer | Unprocessed pellets | 0 | 0.3 | 0.1 | 0 | 135.3 |
| | Sample 1 | 0 | 11.6 | 5.7 | 0 | 230.2 |
| Copolymer | Unprocessed pellets | 0 | 5.8 | 170.5 | 0 | 64.5 |
| | Sample 2 | 0 | 19.2 | 170.6 | 0 | 161.5 |

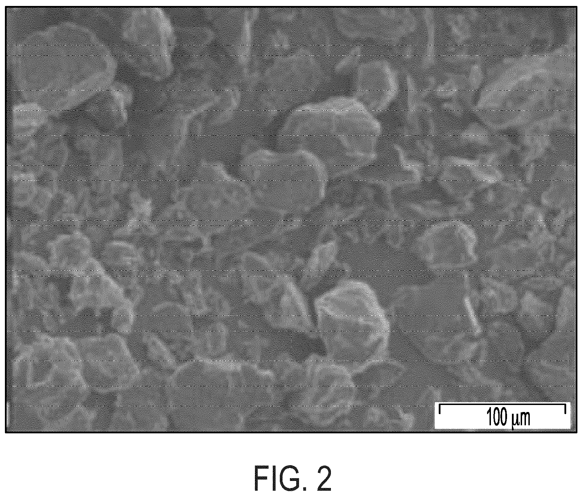

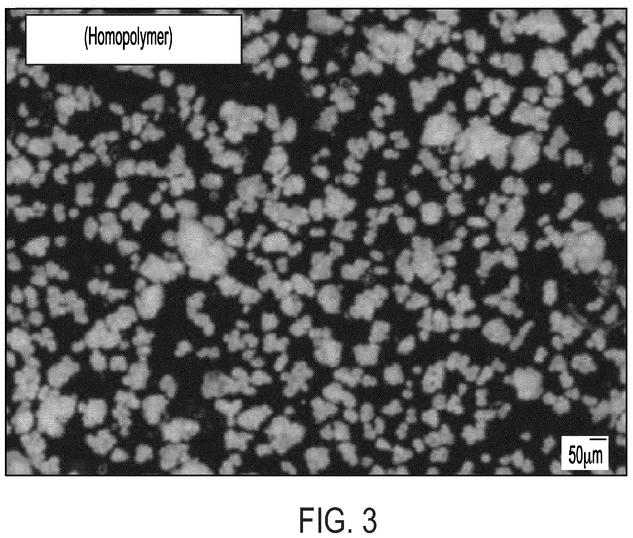

FIG. 2 is an optical micrograph of Sample 1, which was then used to construct the particle size distribution shown in FIG. 3, which indicates a D50 of around 53 microns with a wide distribution due to both fine particles and agglomerates.

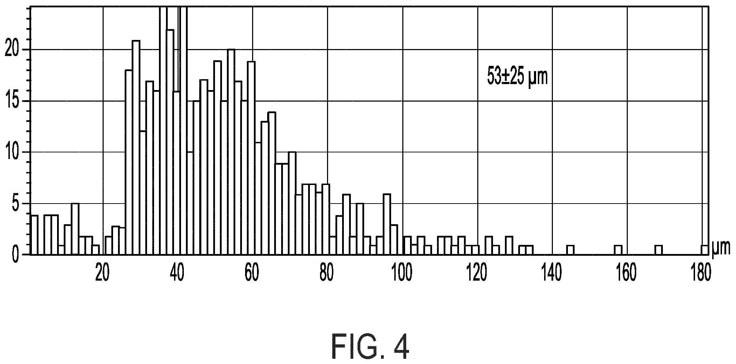

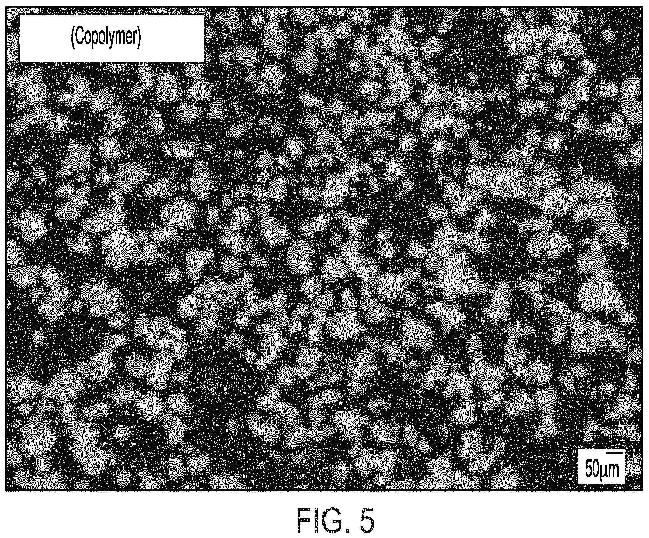

FIG. 4 is an optical micrograph of Sample 2, which was then used to construct the particle size distribution shown in FIG. 5, which indicates a D50 of around 50 microns with a wide distribution due to both fine particles and agglomerates.

Particle sizes for each Sample were also analyzed by a Malvern Mastersizer 3000. Results for wet and dry Samples are shown in Table 5.

| Table 6: Measured particle sizes for polymer samples | | | | |
|---|---|---|---|---|
| | Sample State | d10 (μm) | d50 (μm) | D90 (μm) |
| Sample 1: Homopolymer | Dry | 33.5 | 64.8 | 140 |
| | Wet | 35.4 | 70.8 | 131 |
| Sample 2: Copolymer | Dry | 26.6 | 51.5 | 126 |
| | Wet | 31.2 | 67.7 | 149 |

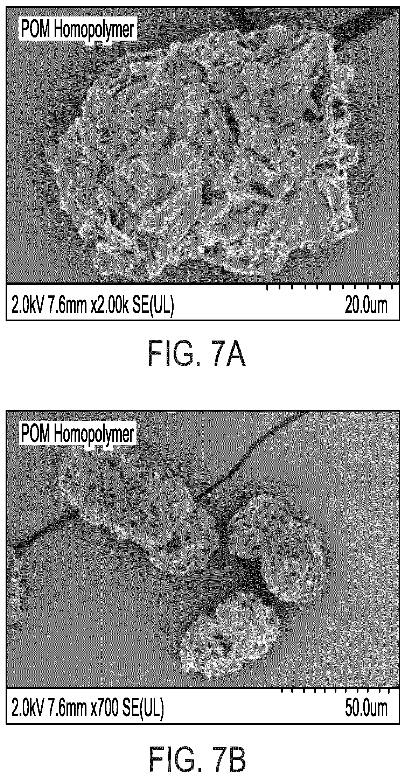

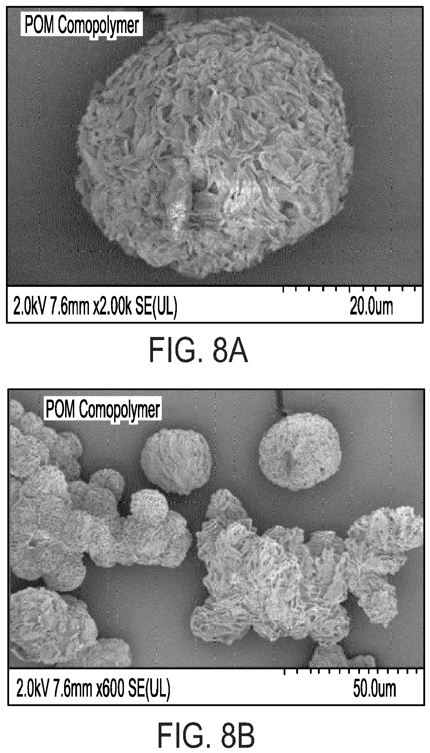

Samples 1 and 2 were also analyzed by scanning electron microscopy (SEM). FIGS. 7A and 7B are SEM micrographs of particles from Sample 1 at various magnifications. FIGS. 8A and 8B are SEM micrographs of particles from Sample 2 at various magnifications. Both Samples pictured exhibit enhanced and faceted surface areas characteristic of the dissolution and precipitation.

*Example 3: POM Particles Produced by Additional Solvents.*

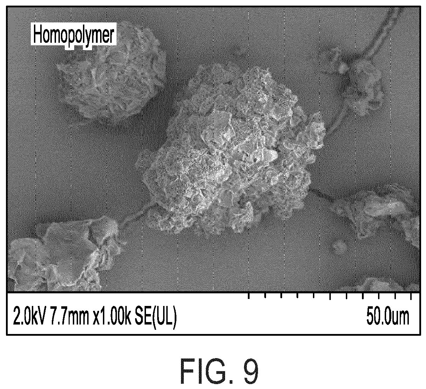

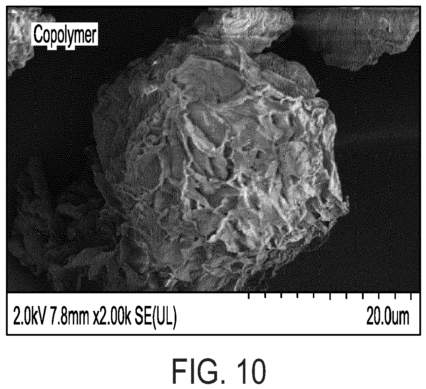

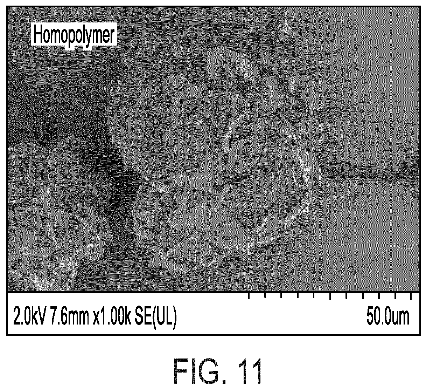

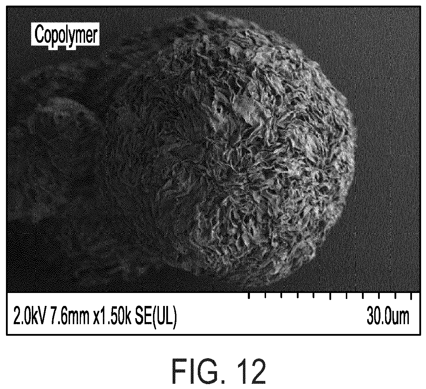

The dissolution and precipitation methodology described in Examples 1 and 2 were also repeated for POM polymer and copolymer using additional solvents benzyl alcohol and gamma-butyrolactone. FIG. 9 is an SEM micrograph of POM homopolymer particles precipitated using benzyl alcohol as a solvent. FIG. 10 is an SEM micrograph of POM copolymer particles precipitated using benzyl alcohol as a solvent. FIG. 11 is an SEM micrograph of POM homopolymer particles precipitated using gamma-butyrolactone as a solvent. FIG. 12 is an SEM micrograph of POM copolymer particles precipitated using gamma-butyrolactone as a solvent.

All documents described herein are incorporated by reference herein for purposes of all jurisdictions where such practice is allowed, including any priority documents and/or testing procedures to the extent they are not inconsistent with this text. As is apparent from the foregoing general description and the specific embodiments, while forms of the disclosure have been illustrated and described, various modifications can be made without departing from the spirit and scope of the disclosure. Accordingly, it is not intended that the disclosure be limited thereby. For example, the compositions described herein may be free of any component, or composition not expressly recited or disclosed herein. Any method may lack any step not recited or disclosed herein. Likewise, the term "comprising" is considered synonymous with the term "including." Whenever a method, composition, element or group of elements is preceded with the transitional phrase "comprising," it is understood that we also contemplate the same composition or group of elements with transitional phrases "consisting essentially of," "consisting of," "selected from the group of consisting of," or "is" preceding the recitation of the composition, element, or elements and vice versa.

Unless otherwise indicated, all numbers expressing quantities of ingredients, properties such as molecular weight, reaction conditions, and so forth used in the present specification and associated claims are to be understood as being modified in all instances by the term "about." Accordingly, unless indicated to the contrary, the numerical parameters set forth in the following specification and attached claims are approximations that may vary depending upon the desired properties sought to be obtained by the embodiments of the present invention. At the very least, and not as an attempt to limit the application of the doctrine of equivalents to the scope of the claim, each numerical parameter should at least be construed in light of the number of reported significant digits and by applying ordinary rounding techniques.

Whenever a numerical range with a lower limit and an upper limit is disclosed, any number and any included range falling within the range is specifically disclosed. In particular, every range of values (of the form, "from about a to about b," or, equivalently, "from approximately a to b," or, equivalently, "from approximately a-b") disclosed herein is to be understood to set forth every number and range encompassed within the broader range of values. Also, the terms in the claims have their plain, ordinary meaning unless otherwise explicitly and clearly defined by the patentee. Moreover, the indefinite articles "a" or "an," as used in the claims, are defined herein to mean one or more than one of the element that it introduces.

One or more illustrative embodiments are presented herein. Not all features of a physical implementation are described or shown in this application for the sake of clarity. It is understood that in the development of a physical embodiment of the present disclosure, numerous implementation-specific decisions must be made to achieve the developer's goals, such as compliance with system-related, business-related, government-related and other constraints, which vary by implementation and from time to time. While a developer's efforts might be timeconsuming, such efforts would be, nevertheless, a routine undertaking for one of ordinary skill in the art and having benefit of this disclosure.

Therefore, the present disclosure is well adapted to attain the ends and advantages mentioned as well as those that are inherent therein. The particular embodiments disclosed above are illustrative only, as the present disclosure may be modified and practiced in different but equivalent manners apparent to one having ordinary skill in the art and having the benefit of the teachings herein. Furthermore, no limitations are intended to the details of construction or design herein shown, other than as described in the claims below. It is therefore evident that the particular illustrative embodiments disclosed above may be altered, combined, or modified and all such variations are considered within the scope and spirit of the present disclosure. The embodiments illustratively disclosed herein suitably may be practiced in the absence of any element that is not specifically disclosed herein and/or any optional element disclosed herein.

**Claims**

1.  A method comprising:

dissolving a polyoxymethylene (POM) homopolymer or copolymer in one or more solvents at an elevated temperature to form a polymer mixture, wherein a difference in total Hansen solubility parameters ($\Delta\delta_t$) for the POM homopolymer or copolymer and the one or more solvents is 6 or less;

cooling the polymer mixture to form a POM particle composition; and

isolating the POM particle composition.

2. The method of claim 1, wherein the one or more solvents comprise one or more selected from a group consisting of C1 to C8 acid amides, C4 to C8 cyclic ethers, C4 to C8 carbonate esters, C4 to C8 cyclic amides, C4 to C8 cyclic esters, propanol, phenol, cyclohexanol, benzyl alcohol, nitrobenzene, aniline, bromobenzene, chlorophenols, and malorinitrile.

3. The method of claim 1, wherein the one or more solvents has a $\Delta\delta_t$ in a range of 2 to 6.

4. The method of claim 1, wherein the elevated temperature is up to a boiling point+10°C ($T_{BP+10C}$) of the one or more solvents.

5. The method of claim 1, wherein dissolving is performed under ambient pressure.

6. The method of claim 1, wherein the POM homopolymer or copolymer percent by weight of the polymer mixture (wt%) is in a range of about 10 wt% to about 20 wt%.

7. The method of claim 1, further comprising adding a precipitating solvent having a $\Delta\delta_t$ between the POM homopolymer or copolymer and the precipitating solvent of 7 or more during the step of cooling the polymer mixture.

8. The method of claim 1, further comprising doping the POM particle composition with a catalyst.

9. The method of claim 1, wherein the POM particle composition has a BET surface area determined according to ASTM D3663-20 in a range of about 5 m$^2$/g to about 30 m$^2$/g.

10. The method of claim 1, wherein the POM particle composition has a D50 determined according to ASTM D1921-18 in a range of about 40 $\mu$m to about 70 $\mu$m.

11. The method of claim 1, wherein the POM particle composition has a decomposition temperature in a range of about 180 °C to about 400 °C.

12. The method of claim 1, wherein the POM particle composition has a sintering window in a range of about 14 °C to about 30 °C.

13. The method of claim 1, wherein the POM particle composition has a sintering window within 5 °C of the sintering window of the POM homopolymer or copolymer.

14. The method of claim 1, wherein the POM particle composition has a Hausner ratio in the range of about 1.0 to about 1.5.

15. The method of claim 1, wherein the POM particle composition has a percentage of void space in a range of about 1% to about 5%.

16. The method of claim 1, wherein isolating comprises filtering the POM particle composition from the polymer mixture.

17. The method of claim 1, wherein the POM particle composition has an angle of repose determined according to ASTM D6393-14 of about 20° to about 50°.

18. The method of claim 1, wherein the POM particle composition has a circularity of about 0.6 or greater.

19. A method comprising:

depositing the POM particle composition of claim 1 upon a surface in a specified shape, and

heating at least a portion of the POM particle composition to promote consolidation thereof and form a consolidated body, such that the consolidated body has a void percentage of about 1.0% or more after being consolidated.

20. The method of claim 19, wherein the consolidated body has a void percentage in a range of about 1.0% to about 5.0%.

FIG. 1

FIG. 2

(Homopolymer)

50μm

FIG. 3

FIG. 4

EP 4 092 069 A1

FIG. 5

50±23 µm

FIG. 6

FIG. 7A

FIG. 7B

FIG. 8A

FIG. 8B

FIG. 9

2.0kV 7.8mm x2.00k SE(UL)    20.0um

FIG. 10

FIG. 11

Copolymer

2.0kV 7.6mm x1.50k SE(UL)                    30.0um

FIG. 12

Europäisches
Patentamt

European
Patent Office

Office européen
des brevets

# EUROPEAN SEARCH REPORT

Application Number

EP 22 17 1219

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DECHET MAXIMILIAN A. ET AL: "Development of Polyoxymethylene Particles via the Solution-Dissolution Process and Application to the Powder Bed Fusion of Polymers", MATERIALS, vol. 13, no. 7, 27 March 2020 (2020-03-27), page 1535, XP055964232, DOI: 10.3390/ma13071535 * the whole document * | 1,2,4,6, 11-20 | INV. C08J3/14 B29C64/10 B33Y70/00 |
| X | CN 107 304 249 A (CHINA PETROLEUM & CHEM CORP ET AL.) 31 October 2017 (2017-10-31) <br><br> * abstract * <br> * examples 1-6 * <br> * claims 1, 3-6, 11, 12 * | 1-4, 6-15, 17-20 | |
| X | CN 106 674 552 A (CHINA PETROLEUM & CHEM CORP ET AL.) 17 May 2017 (2017-05-17) <br><br> * abstract * <br> * examples 1-8 * <br> * claims 1, 3-6, 10, 11 * | 1-4, 6-15, 17-20 | TECHNICAL FIELDS SEARCHED (IPC) <br><br> C08J <br> B33Y <br> B29C |
| X | US 3 384 621 A (SHIGEKI HORIIE ET AL) 21 May 1968 (1968-05-21) * examples 1-6 * * claims 1-5 * | 1,6,9, 11-18 | |
| X | GB 748 835 A (DU PONT) 9 May 1956 (1956-05-09) * page 4, lines 46-55 * * example II * | 1-6 | |

The present search report has been drawn up for all claims

| Place of search | Date of completion of the search | Examiner |
|---|---|---|
| Munich | 4 October 2022 | Vandoolaeghe, P |

EPO FORM 1503 03.82 (P04C01)

## ANNEX TO THE EUROPEAN SEARCH REPORT
## ON EUROPEAN PATENT APPLICATION NO.

EP 22 17 1219

This annex lists the patent family members relating to the patent documents cited in the above-mentioned European search report.
The members are as contained in the European Patent Office EDP file on
The European Patent Office is in no way liable for these particulars which are merely given for the purpose of information.

04-10-2022

| Patent document cited in search report | | Publication date | Patent family member(s) | | Publication date |
|---|---|---|---|---|---|
| CN 107304249 | A | 31-10-2017 | NONE | | |
| CN 106674552 | A | 17-05-2017 | NONE | | |
| US 3384621 | A | 21-05-1968 | DE | 1259567 B | 25-01-1968 |
| | | | FR | 1428091 A | 11-02-1966 |
| | | | GB | 1049001 A | 23-11-1966 |
| | | | US | 3384621 A | 21-05-1968 |
| GB 748835 | A | 09-05-1956 | DE | 938442 C | 02-02-1956 |
| | | | GB | 748835 A | 09-05-1956 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **CHARLES M. HANSEN.** Hansen Solubility Parameters: A User's Handbook. CRC Press, 2007